# EUROPEAN PATENT APPLICATION

(11) **EP 4 793 330 A1**
(43) Date of publication of application: **19.08.2026**
(21) Application number: 25305215.3
(22) Date of filing: 18.02.2025
(51) Int. Cl.: C09K 8/588

(54) **POLYMER FLOODING METHOD USING SEQUENTIAL INJECTIONS OF A SOLUTION OF A POLYMER OF HYDROPHILIC MONOMERS AND A SOLUTION OF AN ASSOCIATIVE POLYMER**

(71) Applicant: SNF Group, 42160 Andrézieux-Bouthéon (FR)
(72) Inventor: KAYSER, Franck, 42160 ANDREZIEUX-BOUTHEON (FR); DUPUIS, Guillaume, 42160 ANDREZIEUX-BOUTHEON (FR); BLONDEL, Frédéric, 42160 ANDREZIEUX-BOUTHEON (FR)
(74) Representative: Ipsilon

(57) **Abstract**

The invention relates to a method for enhanced oil recovery in a subterranean formation. This method involves injecting a first fluid comprising a water-soluble polymer of hydrophilic monomers and injecting a second fluid comprising a water-soluble associative polymer of hydrophilic monomer(s) and hydrophobic monomer(s).

## Description

### Field of the invention

The present invention concerns a polymer flooding injection strategy, as a tertiary enhanced oil recovery (EOR): alternative sequential injections of polymer and associative polymer solutions in the subterranean oil formations.

### Background of the invention

Enhanced Oil Recovery (EOR) techniques, particularly polymer flooding, are widely used to improve oil recovery from reservoirs. Traditional EOR polymers, such as partially hydrolyzed polyacrylamide (HPAM), increase the viscosity of the injected water, thereby improving the mobility ratio and enhancing oil displacement. However, the high concentration of polymers required can sometimes make economics less attractive.

One alternative is the use of associative polymers. They are water soluble polymers which contain hydrophobic groups that form transient networks, leading to higher resistance factors at lower concentrations compared to regular EOR polymers. However, the use of associative polymers (AP) is associated with potential injectivity issues and oil and water separation problems on the production side.

Associative polymer as chemical for tertiary enhanced oil recovery has been injected mainly in China (Bohai Bai) and in Canada (East Bodo, Mooney and Suffield). In all these field cases, the AP was used alone, combined with surfactant (S) and/or with following an ASP (Alkaline Surfactant Polymer) treatment. To the best of our knowledge, the associative polymer was flooded continuously during the flooding strategy.

Patent application CN108485624 A describes an injection strategy in which four different substances: the first one to seal an advantageous permeable channel (AP), the second to pre-absorb the target oil reservoir, the third to adjust the adsorption profile of different permeable layers and the fourth to prevent dilution of the third substance. With this treatment, each chemical flood has a different effect on the reservoir response.

In the case of CN109321224, an alternate injection of AP and surfactant of choice is performed. The dosage of surfactant is adjusted to increase or reduce the viscosity of the sweeping fluid in the reservoir. Previously, Dow (US4432881) already described an injection strategy in 1984 consisting in modifying the AP solution viscosity by addition of surfactant during the solution preparation.

Continuous injection of AP could lead to several troubles: poor polymer propagation/plugging at the near wellbore, production of highly viscous oil in water emulsion which leads to separation issues. This main drawback has been mentioned by Cenovus in their annual report from 2015 about the pilot performed with AP in Suffield.

If such oil in water separation issue occurs, a repercussion on the quality of oil produced is directly observed but not only. The presence of oil in the produced water may lead to injectivity problems if water is reinjected.

### Description of the invention

The present invention provides an innovative method for polymer flooding that combines water-soluble polymers with associative water-soluble polymers to achieve multiple benefits:
1. Reduced Polymer Consumption: Associative polymers provide similar or higher resistance factors at much lower concentrations than polymers, thanks to the hydrophobic interactions. Globally, a lower dosage of polymer is required with associative polymer. By alternating injections of polymers and associative polymers, the overall consumption of polymers is reduced.
2. Improved Mobility Control: The alternating injection schedule enhances mobility control over time, ensuring a more stable and effective displacement of oil throughout the flooding process.
3. Enhanced Sweep Efficiency: The method introduces conformance control, leading to improved sweep efficiency and better overall oil recovery. At low shear rate, which is the case once the polymer is deeper in the reservoir, the hydrophobic associations increase, and the viscosity is stronger than during the injection (high shear rate during this step). The associative polymers stay on the higher permeability area of the reservoir while the polymer (with lower viscosity/Resistance Factor) will reach area with lower permeability. All these phenomena lead to better sweep efficiency and higher oil recovery.

To address the injectivity and separation issues associated with associative polymers, the invention induces injection of only limited-sized slugs of associative polymers, separated by polymer injections. This approach prevents the formation of excessive hydrophobic networks that could impede injectivity and ensures smoother separation processes at the production side.

To summarize, advantages of the invention are:
- Cost Efficiency: The reduced overall consumption of polymers lowers the operational costs associated with polymer flooding projects.
- Enhanced Oil Recovery: Improved mobility control and sweep efficiency led to higher recovery factors and more effective utilization of the reservoir.
- Operational Feasibility: The managed injection of associative polymers minimizes potential issues with injectivity and separation, ensuring a more stable and reliable EOR process.

More precisely, the invention is a method for enhanced oil recovery in a subterranean formation, the method comprising the following steps:
a) preparing an aqueous injection fluid **S1** comprising a water-soluble polymer **P1** of hydrophilic monomers and saltwater **A,** said fluid **S1** having a concentration **C1** of polymer **P1;**
b) preparing an aqueous injection fluid **S2** comprising an associative water-soluble polymer **P2** and saltwater A, said fluid **S2** having a concentration **C2** of polymer **P2** and said polymer **P2** comprising
   x mol% hydrophilic monomer(s) and y mol% hydrophobic monomer(s)
   with 0 < y ≤ 5, and with x + y = 100 and
   said concentration **C2** being between 0.2 **C1** ≤ **C2** ≤ 0.8 **C1;**
c) injecting the aqueous injection fluid **S1** into one or more injection wells of the subterranean formation and sweeping the subterranean formation with the fluid **S1;**
d) stopping the injection of the aqueous injection fluid **S1;**
e) injecting the aqueous injection fluid **S2** into the well(s) of the subterranean formation and sweeping the subterranean formation with the fluid **S2;**
f) stopping injection of aqueous injection fluid **S2;**
g) repeating step c);
h) repeating steps d) to g) at least once, said steps being successive;
i) recovering an aqueous hydrocarbon mixture from one or more producing wells .

This process therefore includes the following sequence **S1/S2/S1/S2/S1:**
- injecting **S1** (step c)),
- injecting **S2** (step e)),
- injecting **S1** (step g)+c)),
- injecting **S2** (step h)+e)),
- injecting **S1** (step h)+ g)).

In the invention, the subterranean formation comprises one or more injection wells and one or more producing wells.

Injections of the aqueous injection fluid **S1** or **S2** are stopped when the subterranean formation has a stabilized resistance factor. The resistance factor corresponds to the force opposing fluid flow in the underground formation.

For injection fluid **S1,** this stabilization is advantageously achieved after injecting a quantity of fluid **S1** comprised between 0.1 and 0.75 times the pore volume of the subterranean formation.

For injection fluid **S2,** this stabilization is advantageously achieved after injecting a quantity of fluid **S2** comprised between 0.01 and 0.5 times the pore volume of the subterranean formation, and more preferably between 0.02 and 0.2 times the pore volume of the subterranean formation.

Advantageously, stabilization of the resistance factor is achieved by injection of a lower quantity of fluid **S2** than quantity of fluid **S1.**

By "polymer" we mean a homopolymer prepared from one monomer or a copolymer prepared from at least two different monomers.

The polymers **P1** and **P2** used in the process of the invention have (independently of each other) each a molecular weight greater than 0.5 million daltons, more preferably between 1 and 80 million daltons, even more preferably between 1 and 60 million daltons, even more preferably between 2 and 40 million daltons, and even more preferably between 3 and 30 million daltons. Molecular weight is defined as weight average molecular weight.

Molecular weight is determined by the intrinsic viscosity of the polymer. Intrinsic viscosity can be measured by methods known to those skilled in the art and can be calculated from reduced viscosity values for different polymer concentrations by a graphical method consisting of plotting reduced viscosity values (y-axis) against concentration (x-axis) and extrapolating the curve to zero concentration. The intrinsic viscosity value is plotted on the y-axis or using the least-squares method. The molecular weight can then be determined by the Mark-Houwink equation:$\left[η\right] = KMα$
[η] represents the intrinsic viscosity of the polymer as determined by the solution viscosity method.
K is an empirical constant.
M represents the molecular weight of the polymer.
α represents the Mark-Houwink coefficient.
K and α depend on the particular polymer-solvent system.

By "water-soluble polymer" we mean a polymer which gives an aqueous solution without insoluble particles when dissolved with stirring at 25°C and a concentration of 10 g.L⁻¹ in deionized water.

By "hydrophilic monomer" is meant a monomer which has an octanol/water partition coefficient, K_{ow}, less than or equal to 1, wherein the partition coefficient K_{ow} is determined at 25°C in an octanol/water mixture having a volume ratio of 1/1, at a pH of between 6 and 8.

By "hydrophobic monomer" is meant a monomer which has an octanol/water partition coefficient, K_{ow}, greater than 1, wherein the partition coefficient K_{ow} is determined at 25°C in an octanol/water mixture having a volume ratio of 1:1, at a pH of between 6 and 8.

The octanol-water partition coefficient, K_{ow}, represents the ratio of concentrations (g/L) of a monomer between the octanol phase and the aqueous phase. It is defined as follows: ${K}_{ow} = \frac{{\left[monomer\right]}_{octanol}}{{\left[monomer\right]}_{water}}$

In the entire specification, viscosities are measured with a Brookfield viscometer, at 25°C in aqueous solution.

In this specification, it is considered that the person skilled in the art is able to determine the Brookfield viscometer module and speed suitable according to the viscosity range to be measured. Indeed, this type of measurement is part of the general knowledge of the person skilled in the art.

As used herein, the expression "A and/or B" means "A, or B, or A and B".

By "water-soluble", this means a compound (for example a polymer or a monomer) which gives an aqueous solution without insoluble particles when it is dissolved while stirring at 25°C and with a concentration of 10 g.l⁻¹ in deionized water.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

All the particular and/or preferred embodiments described in the invention are combinable, provided they are not incompatible.

The hydrophilic monomers of polymers **P1** and **P2** may be non-ionic and/or anionic monomers.

The hydrophilic nonionic monomers are preferably water-soluble vinyl monomers, more preferably selected from the group consisting of: acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains.

The hydrophilic anionic monomers are selected from the group consisting of acrylic acid, methacrylic acid, dimethylacrylic acid, itaconic acid, C1-C3 itaconic acid hemiesters, crotonic acid, maleic acid, fumaric acid, allyl sulfonic acid, methallylsulfonic acid, 2-methylidenepropane-1,3-disulfonic acid, styrene sulfonic acid, 2-acrylamido-2-methylpropane sulfonic acid (ATBS), 2-acrylamido-2-methylpropane disulfonic acid, 3-allyloxy-2-hydroxypropane sulfonic acid, the salts thereof and mixtures thereof.

Preferably, polymers **P1** and **P2** contain between 5 and 100 mol % of hydrophilic anionic monomers, more preferably between 5 and 50 mol % of anionic monomers.

Water-soluble salts of hydrophilic anionic monomers are advantageously alkali metal (preferably sodium or potassium) or alkaline earth metal (preferably calcium or magnesium) or ammonium (preferably NH₄⁺) salts.

Preferably, the non-ionic hydrophilic monomer is acrylamide and
the anionic hydrophilic monomer is selected from the group consisting of acrylic acid and 2-acrylamido-2-methylpropanesulfonic acid, the sodium salt thereof, and mixtures thereof.

Optionally, polymers **P1** and **P2** can contain less than 1 mol% of hydrophilic cationic monomers and/or hydrophilic zwitterionic monomers.

Polymer **P1** consists of hydrophilic monomer(s), and may comprise structuring agent(s).

Polymers **P1** and **P2** may be partially or totally post-hydrolysed.

Post-hydrolysis is the hydrolysis reaction of the polymer after it has been formed by polymerization of the monomer(s). This step consists in reacting hydrolysable functional groups of monomers, advantageously non-ionic functional groups, more advantageously amide or ester functions, with a hydrolysis agent. This hydrolysis agent may, for example, be an enzyme, an ion-exchange resin, or a Brønsted acid metal (for example a hydro halogenic acid) or a Brønsted base (for example an alkali hydroxide or an alkaline-earth hydroxide). Preferably, the hydrolysis agent is a Brønsted base. During this step of post-hydrolysing the polymer, the number of carboxylic acid functions increases. Indeed, the reaction between the hydrolysis agent and the amide or ester functions present in the polymer produces carboxylate groups.

According to the invention, polymers **P1** and **P2** may have a linear, branched, star-shaped or comb-shaped structure. This structure can be obtained, according to the general knowledge of a person skilled in the art, for example by selecting the initiator, the transfer agent, the polymerization technique such as Reversible Addition Fragmentation chain Transfer (RAFT) polymerization, Nitroxide Mediated Polymerization (NMP) or Atom Transfer Radical Polymerization (ATRP), the incorporation of structuring compounds, or the concentration.

Polymers **P1** and **P2** may be structured by a structuring agent. By structured polymer is meant a non-linear polymer, for instance branched, star-shaped or comb-shaped structure.

The structuring agent is advantageously chosen from:
- compounds chosen from polyethylenically unsaturated compounds (having, as a minimum, two unsaturated functions) different from the monomers previously described, like for example, vinyl functions, in particular, allylic or acrylic, and, for example, methylene bis acrylamide (MBA), triallylamine, tetraallylammonium chloride or 1,2 dihydroxyethylene bis-(N-acrylamide),
- compounds having at least two epoxy functions,
- compounds having at least one unsaturated function and an epoxy function,
- macro-initiators such as polyperoxides, polyazoics and transfer polyagents, such as polymercaptan polymers, and polyols,
- functionalized polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

The quantity of structuring agent in the polymer **(P1** and/or **P2)** is advantageously less than 1000 ppm by weight relative to the total weight of the monomers of the polymer, preferably less than 100 ppm by weight, and more preferably less than 10 ppm by weight.

Polymers **P1** and **P2** are water soluble and if they comprise at least one structuring agent, they remain water soluble. A person skilled in the art knows how to adjust the quantity of structuring agent and, possibly, the quantity of transfer agent needed to obtain this result.

Preferably, polymers **P1** and **P2** are linear.

Preferably, the hydrophobic monomer(s) of water-soluble polymer **P2** are chosen in the following list:
- (meth)acrylic acid esters having an alkyl or arylalkyl or ethoxylated or propoxylated chain; (meth)acrylamide derivatives having an alkyl or arylalkyl or dialkyl or ethoxylated or propoxylated chain; anionic hydrophobic derivatives of (meth)acryloyl; and anionic monomer derivatives of (meth)acrylamide bearing a hydrophobic chain;
- hydrophobic monomers corresponding to the general formula

   CH₂=CR1-COO-(EO)n-(PO)m-R2
wherein R1 is hydrogen or methyl; n is an integer equal to at least two, preferably between 6 and 100, even more preferably between 10 and 40; m is an integer between 0 and 50, preferably between 0 and 20, EO is an ethylene oxide group (-CH₂-CH₂-O-), PO is a propylene oxide group (-CH₂-CH(CH₃)-O-) and R2 is a C8-C30 alkyl group or a C8-C30 arylalkyl group, and n+m being from 6 to 100.

Advantageously, the hydrophobic monomer(s) is selected from the group consisting of n-hexyl (meth)acrylate, n-octyl (meth)acrylate, octyl (meth)acrylamide, n-tert-butyl (meth)acrylamide, lauryl (meth)acrylate, (lauryl meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylamide, erucyl (meth)acrylamide, and mixtures thereof.

Preferably, the hydrophobic monomer is ethoxylated behenyl methacrylate (preferably behenyl methacrylate having 25 ethoxy groups) or N-methacrylamidopropyl-N,N-dimethyl-N-dodecylammonium halide wherein the halide is preferably bromide.

Polymer **P2** contains: x mol% hydrophilic monomers, y mol% hydrophobic monomers, with 0< y ≤ 5, preferably between 0.03 ≤ y ≤ 1.

The polymers **P1** and **P2** used to prepare injection fluids **S1** and **S2** can be (independently of each other) in liquid or solid form. Thus, prior to the formation of the aqueous injection fluid, each polymer may be in the form of an inverse emulsion (water in oil) which can be dehydrated, an aqueous suspension, a powder or a dispersion of the polymer in oil. The polymers are preferably in the form of powder or inverse emulsion.

When the polymers are in solid form (advantageously powder), they can be partially or totally dissolved in aqueous solution to obtain fluids **S1** and **S2** using a polymer preparation unit such as the Polymer Slicing Unit (PSU) disclosed in EP 2 203 245.

The injection fluids **(S1** and **S2)** contain the polymer **(P1** and **P2)** and, depending on the technique employed, one or more chemical compounds useful for enhanced hydrocarbon recovery. These chemical compounds include the use of weak, strong or super-strong mineral or organic bases capable of saponifying crude hydrocarbons and forming hydrocarbon-solubilizing surfactant species in-situ. Examples include sodium carbonate, NaOH caustic soda, borate compounds, metaborate compounds, amines, basic polymeric species and mixtures thereof. Another family of compounds commonly injected with polymers are surface-active compounds, often anionic, zwitterionic, cationic and sometimes non-ionic. These compounds are rarely injected pure, but with a co-surfactant and a cosolvent to improve their compatibility and efficiency in the reservoir.

The aqueous injection fluid **S1** has advantageously a concentration **C1** of polymer **P1** comprised between 0.03% and 2% by weight of polymer **P1.**

The aqueous injection fluid **S2** has a concentration **C2** of polymer **P2** comprised between 0.2 **C1** ≤ **C2** ≤ 0.8 **C1.**

The saltwater A, used for preparing injection fluids **S1** and **S2,** is prepared from monovalent and/or polyvalent salts or mixtures thereof. Examples of salts include, but are not limited to, sodium salts, lithium salts, potassium salts, magnesium salts, aluminum salts, ammonium salts, phosphate salts, sulfate salts, chloride salts, fluoride salts, citrate salts, acetate salts, tartrate salts, hydrogen phosphate salts, water-soluble inorganic salts, other inorganic salts and mixtures thereof.

Saltwater A contains at least one of the following elements: sodium chloride, calcium chloride, sodium bromide, calcium bromide, zinc bromide, sodium formate and potassium formate.

Preferably, the total salinity of saltwater A (concentration by weight) is between 100 ppm and 330,000 ppm, more preferably between 1,000 and 150,000 ppm. The total salinity relates to the total amount of sats (preferably monovalent salt(s) and divalent salt(s)) within the saltwater A. For instance, 1000 kg of saltwater preferably comprises 100 g (100 ppm) to 330,000 g (300,000 ppm) of salt(s).

Preferably, the concentration of divalent cations (by weight) in saltwater A is between 5 ppm and 30,000 ppm, more preferably between 100 ppm and 20,000 ppm.

In the method of the invention, steps d) to g) are advantageously repeated at least twice before step i). More advantageously, steps d) to g) are repeated between 2 and 200 times before step i).

The invention and its advantages will be better illustrated by the following non-limiting figures and examples.

### Figures

Figure 1 illustrates a standard laboratory coreflow set-up used in the applicative examples.
Figure 2 shows the impact of the injection method on the fluid propagation on the resistance factor vs the pore volume
Figure 3 shows the evolution of the fluid relative viscosity during the coreflow experiments.
Figure 4 shows the evolution of the resistance factor depending on the injection conditions, as a function of the pore volume.
Figure 5 is a picture of the bottle test just after mixing crude oil with different injection fluids.
Figures 6, 7 and 8 are pictures of bottle tests at room temperature, 30 minutes, 1 hour and 4 hours after mixing crude oil with different injection fluids.

### Examples

### Example 1: Preparation of polymers P1 and P2

### Polymer P1a: Synthesis of an acrylamide (AM)/sodium acrylate (AA) polymer by post-hydrolysis process (P1a)

In a 2 L beaker, an aqueous solution containing 750 g of AM at 50% by weight in water and 750 g of deionized water is prepared at room temperature. The solution is cooled between - 2 and 2°C and acetic acid is added to adjust the pH of the solution between 6 and 7. Once neutralization of the solution is achieved, the solution is cooled between -2 and 4°C and then placed in a Dewar. 225 mg of 2,2' azo bis (2-amidinopropane) dihydrochloride (V50) and 3 mg of 2,2'-azobis[2-(2-imidazolin-2-yl)propane]dihydrochloride (Va044), as azoic initiators, are added.

The solution is homogenized using a hand mixer at a speed of 500 rpm for 20 seconds and deoxygenated under nitrogen bubbling for at least 10 minutes. Once the deoxygenation of the reaction medium is complete, polymerization is initiated by successively adding 0.75 mg of tert-butyl hydroxide (TBHP) and 0.5 mg of Mohr salt to the solution.

The polymerization reaction is complete after 2h30 when the polymer obtained in gel form reaches a final temperature of 76°C. The gel is left aging in the Dewar overnight.

The gel is then ground, 136 g of soda is added and placed in the oven at 70°C for two hours. Once the post-hydrolysis is complete, the powder is dried in an oven at 50°C for 20 hours. The dry polymer particles are then ground and sieved until the obtention of a pre-defined particle size powder. The polymer **P1a** obtained has an average molecular weight between 22 and 33 million Daltons.

### Polymer P1b: Synthesis of an AM/AA copolymer (P1b).

In a 2 L beaker, an aqueous solution containing 580 g of AM at 50% by weight in water, 115 g of acrylic acid and 665 g of deionized water is prepared at room temperature. The solution is cooled between -2 and 2°C. Soda is added to adjust the pH of the charge between 7 and 8. Once neutralization is achieved, the solution is cooled between -2 and 4°C and then placed in a Dewar. 300 mg of V50 initiator is added.

The solution is homogenized using a hand mixer at a speed of 500 rpm for 20 seconds and deoxygenated under nitrogen bubbling for at least 10 minutes. Once the deoxygenation of the reaction medium is complete, polymerization is initiated by successively adding 1.8 mg of TBHP and 2.3 mg of Mohr salt to the solution.

The polymerization reaction is complete after 1h30 when the polymer obtained in gel form reaches a final temperature of 80°C. The gel is left aging in the Dewar overnight. The gel is then ground and dried in an oven at 50°C for 20 hours. The dry polymer particles are then ground and sieved until the obtention of a pre-defined particle size powder. The polymer **P1b** obtained has an average molecular weight between 17 and 22 million daltons.

### Polymer P1c: Synthesis of an AM/AA/sodium 2-acrylamido-2-methylpropane sulfonate (ATBS) terpolymer (P1c).

Polymer **P1c** is prepared according to the procedure of polymer **P1b** using 588 g of AM at 50% by weight in water, 60 g of acrylic acid, 518 g of deionized water, 250 g of ATBS at 50% by weight in water, 1.2 mg of TBHP and 1.5 mg of Mohr salt.

The polymer **P1c** obtained has an average molecular weight between 16 and 20 million Daltons.

### Polymer P1d: Synthesis of ATBS homopolymer (P1d).

In a 2 L beaker, an aqueous load containing 1.5 kg of ATBS at 50% by weight in water is cooled between 5 and 15°C and soda is added to adjust the pH of the charge between 6 and 7. Once neutralization is achieved, the solution is cooled between 5 and 15°C and then placed in a Dewar. 150 mg of V50 and 22.5 mg of Va044, as initiators, are added.

The solution is homogenized using a hand mixer at a speed of 500 rpm for 20 seconds. and deoxygenated under nitrogen bubbling for at least 10 minutes. Once the deoxygenation of the reaction medium is achieved, polymerization is initiated by successively adding 0.4 mg of TBHP, 1.5 mg of sodium persulfate and 2.25 mg of Mohr salt to the solution.

The polymerization reaction is completed after 4 hours when the polymer obtained in gel form reaches a final temperature of 60°C. The gel is left aging in the Dewar overnight. The gel is then ground and dried in an oven at 50°C for 20 hours. The dry polymer particles are then ground and sieved to a pre-defined particle size powder. The polymer **P1d** obtained has an average molecular weight between 4 and 9 million Daltons.

### Polymer P2a:

A polymer **P2a** is prepared according to the post-hydrolysis process described for **P1a** with the extra addition of 3.6 g of hydrophobic monomer N-methacrylamidopropyl-N,N-dimethyl-N-dodecylammonium bromide (MAPDCA) in the monomer solution.

The polymer **P2a** obtained has an average molecular weight equal or superior to 22 million Daltons.

### Polymer P2b:

A polymer **P2b** is prepared according to the procedure described for **P1b** with the extra addition of 1.2 g of MAPDCA in the monomer solution.

The polymer **P2b** obtained has an average molecular weight equal or superior to 17 million Daltons.

### Polymer P2c:

A polymer **P2c** is prepared according to the procedure described for **P1c** with the extra addition of 1 g of hydrophobic monomer behenyl methacrylate EO25 in the monomer solution.

The polymer **P2c** obtained has an average molecular weight equal or superior to 16 million Daltons.

### Polymer P2d:

A polymer **P2d** is prepared according to the procedure described for **P1d** with the extra addition of 2.5 g of MAPDCA in the monomer solution.

The polymer **P2d** obtained has an average molecular weight equal or superior to 5 million Daltons.

### Polymer P2e:

A polymer **P2e** is prepared according to the procedure described for **P1c** with the extra addition of 20 g of behenyl methacrylate EO25 in the monomer solution

The polymer **P2e** obtained is insoluble and cannot be used to modify water viscosity.

Table 1, below, summarizes compositions and processes used for preparing polymers **P1a to P1d** and **P2a** to **P2e.**

**Table 1: Synthesis of polymers P1a to P1d and P2a to P2d**

| **Polymer** | **AM/AA/ATBS molar composition** | **Process** | **Hydrophobic monomer (mol %)** |
|---|---|---|---|
| **P1a** | 65/35/0 | Post-hydrolysis | - |
| **P1b** | 70/30/0 | Copolymerization | - |
| **P1c** | 75/15/10 | Copolymerization | - |
| **P1d** | 0/0/100 | Homopolymerization | - |
| **P2a** | 65/35/0 | Post-hydrolysis | MAPDCA (0.16) |
| **P2b** | 70/30/0 | Copolymerization | MAPDCA (0.05) |
| **P2c** | 75/15/10 | Copolymerization | Behenyl methacrylate EO25 (0.006) |
| **P2d** | 0/0/100 | Copolymerization | MAPDCA (0.15) |

| | | | |
|---|---|---|---|
| MAPDCA: N-methacrylamidopropyl-N,N-dimethyl-N-dodecylammonium bromide | | | |

### Example 2: Applicative examples

### Example 2a: Influence of the injection method on the fluid propagation

Coreflow experiments have been performed to evaluate the polymer injectivity and illustrate the benefits of the injection method of the invention.

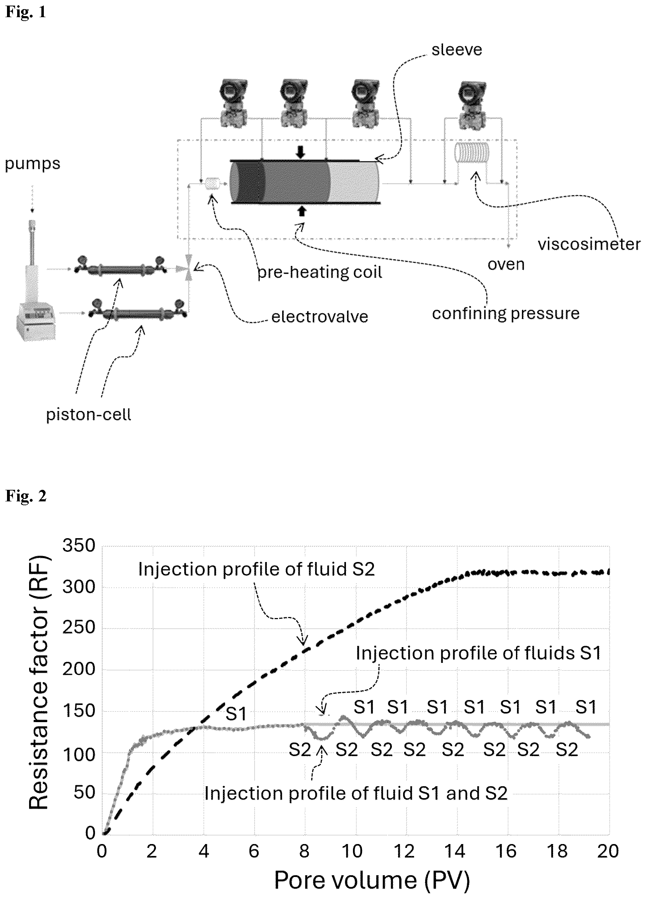

A standard laboratory coreflow set-up has been used for this purpose and is illustrated in Figure 1.

The addition of an electro-valve (and two core holders and pumps instead of one) is the major set-up modification to have a fast switch of the fluid injected compared to classical coreflow set-up.

The saltwater A used in these experiments is brine with a composition close to seawater (30 g/L of NaCl and 3 g/L of CaCl₂,2H₂O). The rocks used for these injections are sandstone (Bentheimer with permeability ranging from 0.5 to 3 Darcy). The three cores came from the same block of rock and have an average permeability of 1.8 mD. The temperature has been fixed to 50°C and the solution flow rate to 12 cc/h.

The injection fluid **S1** is prepared with polymer **P1a** at a concentration of 3 000 ppm.

The injection fluid **S2** is prepared with polymer **P2a** at a concentration of 1 500 ppm.

Three different injection method experiments were performed:
Method 1 (comparative example): Continuous injection of the fluid **S1** alone
Method 2 (comparative example): Continuous injection of the fluid S2 alone
Method 3 (invention): Alternance of injections of fluids S1 and S2 as follows:
   a) Injection of the fluid **S1** during 8 pore volume (PV),
   b) Injection of the fluid **S2** during 0.5 PV
   c) Injection of the fluid **S1** during 0.5 PV
   d) The steps b) and c) are successive and repeated 8 times

The results are represented in the Table 2 below and in Figure 2.

**Table 2: Results of the injection method on the fluid propagation**

| **Injection method** | **Fluid** | **Pore volume to flow stabilization** | **Resistance factor** |
|---|---|---|---|
| 1 | **S1** | ~ 1.5 PV | 125 |
| 2 | **S2** | ~ 15 PV | 320 |
| 3 | **S1-S2-S1** (8 times) | ~ 1.5 PV | 110-140 |

In the injection method 1 (fluid **S1** only), the polymer flow stabilized rapidly and a resistance factor (RF) of 125 is observed. In contrast, with the injection method 2, 10 times more pore volume (PV) were required to get a stabilization of the flow with injection fluid **S2** alone. The RF induced by this fluid was also much higher than with fluid **S1.**

Injection method 3 according to the invention leads to a polymer flow stabilized rapidly and a RF within the range of the fluid **S1** alone. This injection method allows reducing the global polymer consumption by 25% (fluid **S2** is 50% less concentrated than fluid **S1** and the sequence of alternance corresponds to 0.5 PV each) once the first 8 PV of fluid **S1** have been injected. In this example 8 PV of fluid **S1** was injected but it could be significantly decreased to fasten the deployment of steps b), c) and d).

### Example 2b: Evolution of the fluid relative viscosity

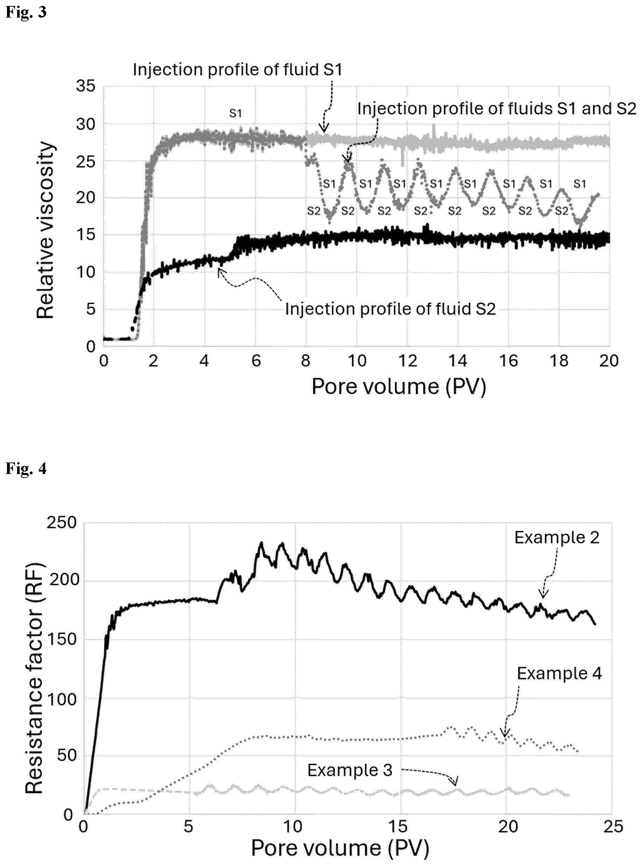

The evolution of the relative viscosity of the fluid injected during these three experiments is represented in Figure 3.

In this Figure, it can be seen that the injection method 1 leads to a maximum of relative viscosity reached around 2 PV which then stay constant to around 28.

In the case of injection method 2, the relative viscosity is stable after 6 PV and reach a value of 15. The fluid **S2** develops more RF than the fluid **S1** even if the relative viscosity is lower for fluid **S2.** This behaviour is typical for associative polymers.

With the injection method 3, the fluid viscosity fluctuated between the viscosities of fluids **S1** and **S2** once the sequential injection initiated.

### Example 2c: Influence of the saltwater on the resistance factor

The influence of saltwater A of different subterranean formations was also evaluated using the injection method 3. The choice of polymer was made according to the subterranean formation temperature, salinity and permeability.

Three different Saltwaters A were evaluated in this study. Their compositions are summarized in table 3 below.

**Table 3: Saltwater A compositions**

| Saltwater A composition (g/L) | Low salinity (LS) | Seawater (SW) | High salinity (HS) |
|---|---|---|---|
| NaCl | 3 | 30 | 180 |
| KCl | - | - | 5 |
| CaCl₂,2H₂O | 0.3 | 3 | 70 |
| MgCl₂,6H₂O | - | - | 30 |

The injection conditions are summarised in the table 4 below.

The polymer flow rate in each experiment is 12 cc/h.

**Table 4: Injection conditions in experiments 1 to 4.**

| | **Reservoir properties** | | | | | | | |
|---|---|---|---|---|---|---|---|---|
| **Ex.** | Saltwater A | Core | | T (°C) | Fluid **S1** | | Fluid **S2** | |
| | | Type | Permeability (mD) | | Polymer | Concentration (ppm) | Polymer | Concentration (ppm) |
| **1** | SW | Bentheimer | 1800 | 50 | **P1a** | 3000 | **P2a** | 1500 |
| **2** | LS | Berea | 200 | 30 | **P1b** | 1000 | **P2b** | 600 |
| **3** | HS | Castel-gate | 400 | 40 | **P1c** | 2000 | **P2c** | 800 |
| **4** | HS | Estail-lade | 70 | 100 | **P1d** | 1500 | **P2d** | 600 |

The resistance factors obtained for experiment 1 is represented in Figure 2 and for experiments 2 to 4 in Figure 4. The sequential injection of fluids **S1** and **S2** has been successful since the resulting RF is closed to the one obtained while injecting **S1** with a reduction of polymer dosage (table 5).

**Table 5: Overall polymer consumption**

| Ex. | Fluid **S1** | | | Fluid **S2** | | Number of repetitions | Polymer dosage (%) steps B + C |
|---|---|---|---|---|---|---|---|
| | PV (step A) | Dosage (ppm) | PV (step B) | Dosage (ppm) | PV (step C) | | |
| 1 | 8 | 3000 | 0.50 | 1500 | 0.50 | 8 | -25 |
| 2 | 17 | 1000 | 0.67 | 600 | 0.33 | 17 | -27 |
| 3 | 15 | 2000 | 0.67 | 800 | 0.33 | 15 | -20 |
| 4 | 7 | 1500 | 0.33 | 600 | 0.67 | 7 | -40 |

Thanks to a significantly lower concentration of **P2** in S2 compared to **P1** in **S1,** the global polymer consumption is reduced while keeping an efficient reservoir sweeping.

### Example 2d: Bottle visual test

To evaluate the benefits of the sequential injection on the oil-water separation at the production side, some bottle tests have been performed. To prepare the mixture, 50 g of the injection fluid have been mixed with 50 g of an emulsion of seawater/crude oil (20% of by weight of crude oil). The solutions are stirred during 10 min with an agitation table and then left to stand. The quality of the oil-water interface is visually checked.

Compositions of the different bottles is detailed in the table 6 below.

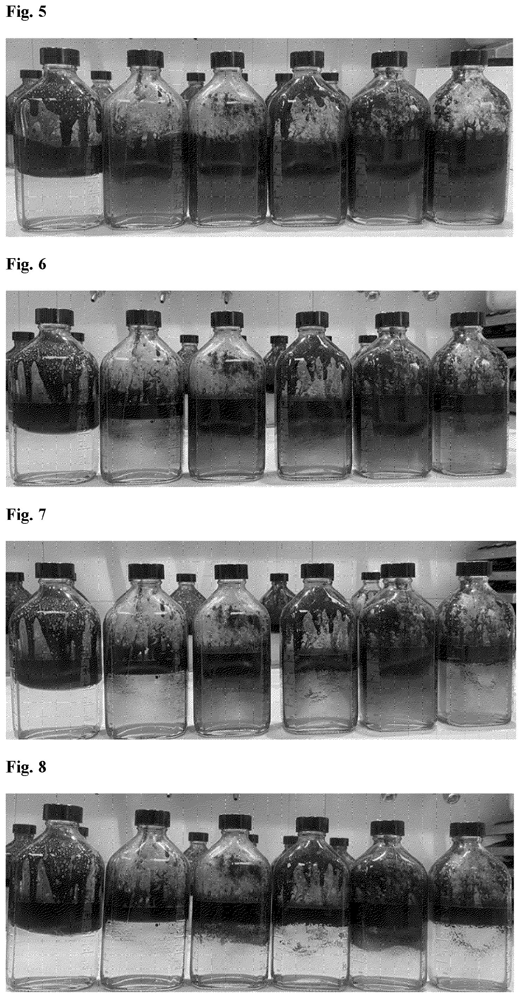

Visual aspect of the six bottles is shown in Figure 5.

**Table 6: Compositions of bottles 1 to 6 containing the injection fluid, saltwater SW and crude oil**

| **Bottle** | **Injection fluid** | **Polymer P1** | **Polymer P2** |
|---|---|---|---|
| **N°1** | Saltwater SW | - | - |
| **N°2** | **S1** | **P1a** (200 ppm) | - |
| **N°3** | **S2** | - | **P2a** (200 ppm) |
| **N°4** | **S1+S2** | **P1a** (100 ppm) | **P2a** (100 ppm) |
| **N°5** | **S2** | - | **P2b** (200 ppm) |
| **N°6** | **S1+S2** | **P1a** (134 ppm) | **P2b** (66 ppm) |

As can be seen in Figure 5, bottle N°1, free of polymers, has a good phase separation. Bottles n°2, 4 and 6 have a similar behaviour. This shows that the further addition of associative polymers **P2a or P2b** doesn't affect the phase separation.

On the contrary, the addition of a fluid containing only an associative polymer (bottles n°3 and 5) delays the phase separation. The time required to get a similar oil-water interface is much more important.

The strategy of sequentially injected the fluids **S1** and **S2** will be favourable to avoid the presence of only associative polymer in the produced fluid.

## Claims

1. A method for enhanced oil recovery in a subterranean formation, the method comprising the following steps:
a) preparing an aqueous injection fluid **S1** comprising a water-soluble polymer **P1,** of hydrophilic monomers, and saltwater **A,** said fluid **S1** having a concentration **C1** of polymer **P1;**
b) preparing an aqueous injection fluid **S2** comprising a water-soluble associative polymer **P2** and saltwater **A,** said fluid **S2** having a concentration **C2** of polymer **P2** and said polymer **P2** comprising
**x** mol% of hydrophilic monomer(s) and **y** mol% of hydrophobic monomer(s)
with 0 < **y** ≤ 5, and with **x** + **y** = 100 and
said concentration **C2** being between 0.2 **C1** ≤ **C2** ≤ 0.8 **C1;**
c) injecting the aqueous injection fluid **S1** into one or more injection wells of the subterranean formation and sweeping the subterranean formation with the fluid **S1;**
d) stopping the injection of the aqueous injection fluid **S1;**
e) injecting the aqueous injection fluid **S2** into the well(s) of the subterranean formation and sweeping the subterranean formation with the fluid **S2;**
f) stopping the injection of aqueous injection fluid **S2;**
g) repeating step c);
h) repeating steps d) to g) at least once, said steps being successive;
i) recovering an aqueous hydrocarbon mixture from one or more producing wells.

2. Method according to claim *1,* ***characterized* in that** the polymers **P1** and **P2** have each a weight average molecular weight greater than 0.5 million Daltons.

3. Method according to one of the preceding claims, ***characterized* in that** the hydrophilic monomers of polymers **P1** and **P2** are any one of the following non-ionic and anionic monomers:
- the hydrophilic nonionic monomers being selected from the group consisting of: acrylamide, methacrylamide, N-alkylacrylamides, N-alkylmethacrylamides, N,N-dialkyl acrylamides, N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide, N-vinyl acetamide, N-vinyl imidazole, N-vinyl succinimide, acryloyl morpholine, glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains;
- the hydrophilic anionic monomers being selected from the group consisting of acrylic acid, methacrylic acid, dimethylacrylic acid, itaconic acid, C1-C3 itaconic acid hemiesters, crotonic acid, maleic acid, fumaric acid, allyl sulfonic acid, methallylsulfonic acid, 2-methylidenepropane-1,3-disulfonic acid, styrene sulfonic acid, 2-acrylamido-2-methylpropane sulfonic acid, 2-acrylamido-2-methylpropane disulfonic acid, 3-allyloxy-2-hydroxypropane sulfonic acid, the salts thereof and mixtures thereof.

4. Method according to claim 3, ***characterized* in that**:
- the non-ionic hydrophilic monomer is acrylamide,
- the anionic hydrophilic monomer is selected from the group consisting of acrylic acid and 2-acrylamido-2-methylpropanesulfonic acid, the sodium salt thereof, and mixtures thereof.

5. Method according to one of the preceding claims, ***characterized* in that** the concentration **C1** of polymer **P1** in the fluid **S1** is comprised between 0.03% and 2% by weight of polymer **P1.**

6. Method according to one of the preceding claims, ***characterized* in that** the hydrophobic monomer(s) of polymer **P2** is selected from the group consisting of:
- (meth)acrylic acid esters having an alkyl or arylalkyl or ethoxylated or propoxylated chain on the ester group; (meth)acrylamide derivatives having an alkyl or arylalkyl or dialkyl or ethoxylated or propoxylated chain on the amide group; anionic hydrophobic derivatives of (meth)acryloyl; and anionic monomer derivatives of (meth)acrylamide bearing a hydrophobic chain;
- hydrophobic monomers corresponding to the general formula CH₂=C(R1)-C(O)O-(EO)n-(PO)m-R2
wherein R1 is hydrogen or methyl; n is an integer equal to at least two; m is an integer between 0 and 50, EO is ethylene oxide (-CH₂-CH₂-O-), PO is propylene oxide (-CH₂-CH(CH₃)-O-) and R2 is a C8-C30 alkyl group or a C8-C30 arylalkyl group, and n+m being from 6 to 100.

7. Method according to claim 6 ***characterized* in that** the hydrophobic monomer(s) is selected from the group consisting of n-hexyl (meth)acrylate, n-octyl (meth)acrylate, octyl (meth)acrylamide, n-tert-butyl (meth)acrylamide, lauryl (meth)acrylate, (lauryl meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylamide, erucyl (meth)acrylamide, and mixtures thereof.

8. Method according to one of the preceding claims, ***characterized* in that** polymer **P2** comprises y mol% of hydrophobic monomer(s), with 0.03 **< y** ≤ 1.

9. Method according to one of the preceding claims, ***characterized* in that**, in step h), steps d) to g) are repeated at least twice before step i).
